# EUROPEAN PATENT APPLICATION

(11) **EP 2 112 660 A1**
(43) Date of publication of application: **28.10.2009**
(21) Application number: 08704062.2
(22) Date of filing: 29.01.2008
(51) Int. Cl.: G11B 7/254, C08F 290/06, C08G 18/79, C08L 33/14, G11B 7/24, G11B 7/257

(54) **ULTRAVIOLET-CURABLE COMPOSITION FOR OPTICAL DISK AND OPTICAL DISK USING THE SAME**

(30) Priority: 13.02.2007 JP 2007031871
(71) Applicant: DIC Corporation, Tokyo 174-8520 (JP)
(72) Inventor: ITO, Daisuke, Kitaadachi-gun Saitama 362-8577 (JP); YAMAGUCHI, Junji, Kitaadachi-gun Saitama 362-8577 (JP); TOKUDA, Hiroyuki, Ichihara-shi Chiba 290-8585 (JP); KOBAYASHI, Nobuo, Ichihara-shi Chiba 290-8585 (JP); ATSUMI, Masataka, Ichihara-shi Chiba 290-8585 (JP)
(74) Representative: Albrecht, Thomas
(86) International application number: PCT/JP2008/051255
(87) International publication number: WO 2008/099666

(57) **Abstract**

An ultraviolet-curable composition of the present invention, which is used for a light transmission layer of an optical disk, includes a urethane (meth)acrylate having an isocyanate structure; and at least one of a monofunctional (meth)acrylate and a difunctional (meth)acrylate, wherein the combined amount of the urethane (meth)acrylate, the monofunctional (meth)acrylate and the difunctional (meth)acrylate is at least 90% by mass of the ultraviolet-curable composition. This ultraviolet-curable composition for a light transmission layer is able to realize an optical disk that exhibits excellent durability even under conditions of high temperature and high humidity, minimal decrease in light reflectance, and excellent adhesion between layers.

## Description

### TECHNICAL FIELD

The present invention relates to an ultraviolet-curable composition that is used for a light transmission layer for an optical disk in which at least a light reflection layer and the light transmission layer, and recording or reading is conducted by irradiating a blue laser beam having an emission wavelength within a range from 370 to 430 nm through the light transmission layer. The invention also relates to an optical disk that uses the ultraviolet-curable composition for a light transmission layer.

### BACKGROUND ART

In recent years, developments in information technology and information networks have meant that the transmission of large volumes of recorded information can be performed on a regular basis. These developments have lead to demands for high-density, high-volume optical disks that are capable of recording and reading large-volume movie files, music files and computer data. In the case of DVD (Digital Versatile Disc), which is a widely available high-density recording medium, a laser of wavelength 650 nm that is shorter than that used for CD (Compact Disc), and a higher aperture for the optical system are used to achieve increased density. However, in order to enable the recording and reading of high-definition movies and the like that are compatible with HDTV (high definition television), further increases in density are required, and as a result, even higher density recording methods and optical disks are being investigated as the next generation beyond DVD, and high-density recording systems based on new optical disk structures that use a blue laser optical system with an even shorter wavelength than that used for DVD have already been proposed.

These new optical disks are produced by forming an information recording region such as pits or an information recording layer on a transparent or opaque substrate formed from a plastic such as a polycarbonate, and then laminating a light transmission layer having a thickness of approximately 100 µm on top of the information recording region, wherein the recording light beam or reading light beam, or both of these beams, enter the optical disk structure via the light transmission layer. For reasons of productivity, research into this optical disk light transmission layer has been focused almost exclusively on the use of ultraviolet-curable compositions.

In this type of optical disk where recording or reading is conducted using a blue laser (namely, a Blu-ray disc, hereafter abbreviated as BD), the light transmission layer is thicker than the light transmission layer used in a DVD, and also differs from the intermediate layer used in the DVD-9 structure in that the light transmission layer is provided either as the surface layer or close to the surface layer. Accordingly, if ultraviolet-curable compositions for optical disks that have been used favorably for DVD are simply applied to BD, then deterioration in the reliability of recording and reading due to problems such as deformation or corrosion of the light reflection layer tends to be more marked than that observed for DVD. Moreover, the light transmission layer must exhibit stable light transmittance of short wavelength light over long periods, and because it is used either as the surface layer or close to the surface layer, the light transmission layer also requires a high degree of hardness. In addition, to avoid productivity problems, the composition must be capable of favorably generating a thick film.

As an example of an ultraviolet-curable composition that can reduce warping of the optical disk, an ultraviolet-curable composition has been disclosed that includes a urethane (meth)acrylate obtained by reacting a monomer, obtained by reacting a hydroxyl group-containing (meth)acrylate with a lactone compound, and a polyisocyanate compound (see Patent Document 1). By using a urethane (meth)acrylate that exhibits comparatively superior flexibility, this ultraviolet-curable composition is useful as a protective coating agent that has a low curing shrinkage ratio and low viscosity. However, the viscosity of this composition is too low for application to the light transmission layer for BD, and forming a thick film is problematic. Furthermore, if the amount of the urethane (meth)acrylate is increased to raise the viscosity, and an optical disk light transmission layer is then formed, then another problem arises in that under conditions of high temperature and high humidity, degradation such as metal film corrosion tends to occur.

Furthermore, as an example of a composition capable of forming a resin film that exhibits minimal corrosion of the metal film of a recording medium, a resin composition has been disclosed that includes a high-specific gravity liquid oligomer having a specific gravity of at least 1.10 (see Patent Document 2). By using an epoxy acrylate with low moisture permeability, and in particular a high-specific gravity liquid oligomer such as a bisphenol A epoxy acrylate, this composition inhibits corrosion of the metal thin film and reduces discoloration of the recording medium, but because the oligomer has a rigid structure, if the composition is used for the surface layer of a recording medium, and particularly as the light transmission layer for a BD, then warping becomes a problem, which tends to cause a deterioration in the reliability of the recording medium.

On the other hand, as an example of a radiation-curable composition used for an optical article having a prism action and a lens action, a composition has been disclosed that includes a urethane (meth)acrylate having three (meth)acryloyl groups in the molecule, and a (meth)acrylate having three (meth)acryloyl groups in the molecule (see Patent Document 3). When laminated to a resin film, this composition generates a cured film that exhibits excellent curl properties, shape retention, transparency, and surface hardness and the like. However, if a composition composed of a urethane (meth)acrylate having three (meth)acryloyl groups in the molecule and a (meth)acrylate having three (meth)acryloyl groups in the molecule is used for the light transmission layer of an optical disk, then a problem arises in that the composition exhibits poor adhesion to the metal reflective film. Furthermore, among (meth)acrylates having three (meth)acryloyl groups, although EO- or PO-modified (meth)acrylates exhibit adhesion to metal reflective films, because such compounds contain large numbers of hydrophilic structures, they suffer from durability problems under conditions of high temperature and high humidity.

[Patent Document 1]
   Japanese Unexamined Patent Application, First Publication No. Hei 11-12495
[Patent Document 2]
   Japanese Unexamined Patent Application, First Publication No. Hei 11-302309
[Patent Document 3]
   Japanese Unexamined Patent Application, First Publication No. 2002-69139

### DISCLOSURE OF INVENTION

### PROBLEMS TO BE SOLVED BY THE INVENTION

An object of the present invention is to provide an ultraviolet-curable composition the generates a light transmission layer having excellent durability under conditions of high temperature and high humidity, and favorable adhesion to light reflection films. Another object is to provide an optical disk that suffers minimal reduction in light reflectance even under conditions of high temperature and high humidity.

### MEANS TO SOLVE THE PROBLEMS

The inventors of the present invention discovered that by using the cured film of a composition containing a urethane (meth)acrylate of a specific structure and a monofunctional or difunctional (meth)acrylate as a light transmission layer, discoloration of the light transmission layer under conditions of high temperature and high humidity, and whitening caused by corrosion or oxidation of the metal thin film could be suppressed, and the occurrence of warping could also be reduced, and they were therefore able to complete the present invention.

In other words, the present invention provides an ultraviolet-curable composition for a light transmission layer, which is used for the light transmission layer of an optical disk in which at least a light reflection layer and the light transmission layer are laminated on a substrate, and reading of information is conducted by irradiating a blue laser from the side of the light transmission layer,
the composition includes a urethane (meth)acrylate represented by formula (1) shown below:

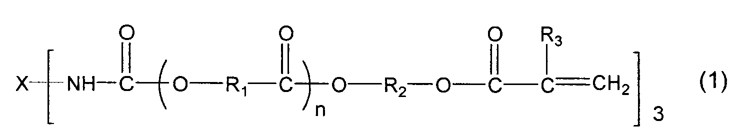

(wherein X represents a residue obtained by removing an isocyanato group from a trimer of an aliphatic diisocyanate compound or a residue obtained by removing an isocyanato group from a trimer of an alicyclic diisocyanate compound, R₁ represents an alkylene group of 2 to 12 carbon atoms, R₂ represents an alkylene group of 2 to 16 carbon atoms, R₃ represents a hydrogen atom or a methyl group, and n represents an integer of 1 to 10); and
at least one of a monofunctional (meth)acrylate and a difunctional (meth)acrylate, wherein
the combined amount of the urethane (meth)acrylate, the monofunctional (meth)acrylate and the difunctional (meth)acrylate is at least 90% by mass of all ultraviolet-curable compounds.

Furthermore, the present invention also provides an optical disk in which at least a light reflection layer and a light transmission layer formed from a cured product of an ultraviolet-curable composition are laminated on a substrate, reading of information is conducted by irradiating a blue laser from the side of the light transmission layer, and the ultraviolet-curable composition is the ultraviolet-curable composition for a light transmission layer described above.

### EFFECT OF THE INVENTION

The ultraviolet-curable composition for a light transmission layer according to the present invention is capable of forming a cured film that exhibits excellent durability and is resistant to yellowing or reduced light reflectance even under conditions of high temperature and high humidity. Furthermore, warping, which can cause a deterioration in various properties, is also minimal. An optical disk that uses this type of cured film of superior durability as a light transmission layer is resistant to decreases in the light reflectance caused by discoloration or warping, and suffers minimal deterioration in signal properties, even under conditions of high temperature and high humidity, and therefore provides favorable recording and reading of information using a short-wavelength blue laser beam.

### BEST MODE FOR CARRYING OUT THE INVENTION

### [Urethane (meth)acrylate]

A urethane (meth)acrylate having three (meth)acryloyl groups within the molecule that is used in the present invention has a structure represented by formula (1).

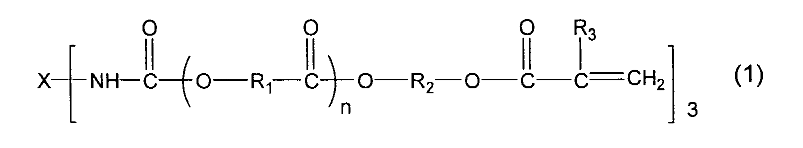

(wherein X represents a residue obtained by removing an isocyanato group from a trimer of an aliphatic diisocyanate compound or a residue obtained by removing an isocyanato group from a trimer of an alicyclic diisocyanate compound, R₁ represents an alkylene group of 2 to 12 carbon atoms, R₂ represents an alkylene group of 2 to 16 carbon atoms, R₃ represents a hydrogen atom or a methyl group, and n represents an integer of 1 to 10.)

The urethane (meth)acrylate has three (meth)acryloyl groups that act as cross-linking points, and because the distance between each of these cross-linking points can be maintained within a fixed range in three directions, this compound is capable of forming a cured film that exhibits excellent shape retention and minimal moisture permeation. Further, because the urethane (meth)acrylate has a structure derived from an aliphatic or alicyclic diisocyanate compound, it exhibits favorable adhesion to each of the layers that constitute an optical disk, and particularly to light reflection layers formed from metal thin films, and is also capable of forming a cured film that suffers no discoloration even under conditions of high temperature and high humidity.
Examples of the urethane (meth)acrylate represented by formula (1) include compounds obtained by reacting a compound having three or more isocyanate groups with a (meth)acrylate compound having a hydroxyl group within the molecule.

Of the urethane (meth)acrylates represented by formula (1), the use of urethane (meth)acrylates in which X within formula (1) is a trivalent group represented by either formula (2) or formula (3) shown below is particularly desirable, because production of the resin is simple despite including three functional groups, and because the three-pronged structure includes no aromatic rings, meaning it exhibits excellent light fastness.

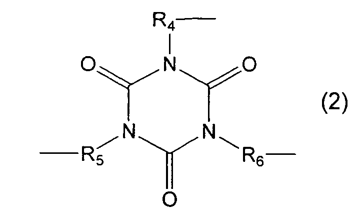

(wherein R₄, R₅ and R₆ each independently represents a chain-like or cyclic hydrocarbon group of 2 to 16 carbon atoms that may include branching.)

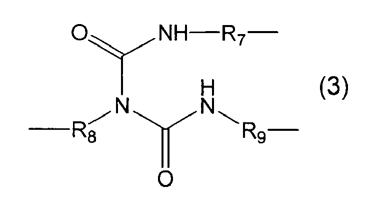

(wherein R₇, R₈ and R₉ each independently represents a chain-like or cyclic hydrocarbon group of 2 to 16 carbon atoms that may include branching.)

Of the above possibilities, groups represented by formula (3) are capable of forming a cured film having a particularly low elastic modulus as well as superior adhesion and durability, and are therefore preferred.

Furthermore, in order to achieve superior light fastness, the group R in the above formulas (2) and (3) is preferably a chain-like hydrocarbon group of 4 to 10 carbon atoms or a cyclic hydrocarbon group represented by formula (4) shown below, and is more preferably a chain-like hydrocarbon group of 4 to 8 carbon atoms.

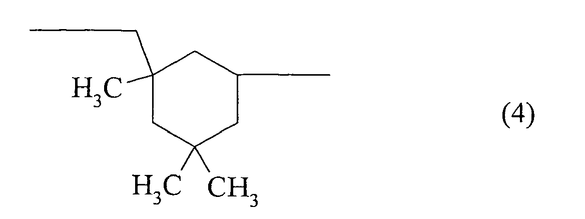

Furthermore, in order to better suppress the occurrence of warping, the group R₁ in formula (1) is preferably an alkylene group of 3 to 7 carbon atoms, and is more preferably a linear alkylene group of 5 carbon atoms. Similarly, R₂ is preferably an alkylene group of 2 to 5 carbon atoms, and is more preferably a linear alkylene group of 2 carbon atoms. The value of n is preferably within a range from 1 to 5, and more preferably from 2 to 4.

### [Monofunctional or difunctional (meth)acrylate]

In the present invention, by using a monofunctional or difunctional (meth)acrylate in combination with the urethane (meth)acrylate represented by formula (1), yellowing or reduced light reflectance can be better suppressed even under conditions of high temperature and high humidity, enabling the formation of a cured film having excellent durability. Furthermore, warping, which can cause a deterioration in various properties, is also minimal.

Examples of monofunctional (meth)acrylates that may be used in the present invention include ethyl (meth)acrylate, butyl (meth)acrylate, 2-ethylhexyl (meth)acrylate, nonyl (meth)acrylate, tridecyl (meth)acrylate, hexadecyl (meth)acrylate, octadecyl (meth)acrylate, isoamyl (meth)acrylate, isodecyl (meth)acrylate, isostearyl (meth)acrylate, cyclohexyl (meth)acrylate, benzyl (meth)acrylate, 2-hydroxyethyl (meth)acrylate, 3-chloro-2-hydroxypropyl (meth)acrylate, methoxyethyl (meth)acrylate, butoxyethyl (meth)acrylate, nonylphenoxyethyl (meth)acrylate, tetrahydrofurfuryl (meth)acrylate, glycidyl (meth)acrylate, 2-hydroxy-3-phenoxypropyl (meth)acrylate, nonylphenoxyethyltetrahydrofurfuryl (meth)acrylate, and caprolactone-modified tetrahydrofurfuryl (meth)acrylate.

Of these, phenoxyethyl (meth)acrylate, tetrahydrofurfuryl (meth)acrylate, ethylcarbitol (meth)acrylate and isobornyl acrylate are preferred from the viewpoint of their dilution effect.

Examples of difunctional (meth)acrylates that may be used in the present invention include polyoxyalkyl ether poly(meth)acrylates such as 1,4-butanediol di(meth)acrylate, 3-methyl-1,5-pentanediol di(meth)acrylate, 1,6-hexanediol di(meth)acrylate, neopentyl glycol di(meth)acrylate, 2-methyl-1,8-octanediol di(meth)acrylate, 2-butyl-2-ethyl-1,3-propanediol di(meth)acrylate, ethylene glycol di(meth)acrylate, diethylene glycol di(meth)acrylate, dipropylene glycol di(meth)acrylate, tripropylene glycol di(meth)acrylate and polypropylene glycol di(meth)acrylate, as well as neopentyl glycol hydroxypivalate di(meth)acrylate, and monomers having an alicyclic structure such as norbornanedimethanol di(meth)acrylate, norbornanediethanol di(meth)acrylate, the di(meth)acrylate of a diol obtained by adding 2 mols of ethylene oxide or propylene oxide to norbornanedimethanol, tricyclodecanedimethanol di(meth)acrylate, tricyclodecanediethanol di(meth)acrylate, the di(meth)acrylate of a diol obtained by adding 2 mols of ethylene oxide or propylene oxide to tricyclodecanedimethanol, pentacyclopentadecanedimethanol di(meth)acrylate, pentacyclopentadecanediethanol di(meth)acrylate, the di(meth)acrylate of a diol obtained by adding 2 mols of ethylene oxide or propylene oxide to pentacyclopentadecanedimethanol, and the di(meth)acrylate of a diol obtained by adding 2 mols of ethylene oxide or propylene oxide to pentacyclopentadecanediethanol.

Of these, tricyclodecanedimethanol di(meth)acrylate, dipropylene glycol di(meth)acrylate, tripropylene glycol di(meth)acrylate and 1,6-hexanediol di(meth)acrylate provide superior durability and resistance to discoloration, and are therefore preferred.

Furthermore, oligomers such as difunctional epoxy (meth)acrylates may also be used as the difunctional (meth)acrylate.

### [Ultraviolet-curable composition for light transmission layer]

The ultraviolet-curable composition for a light transmission layer according to the present invention includes a urethane (meth)acrylate represented by formula (1), and at least one of functional (meth)acrylate and a difunctional (meth)acrylate, wherein the combined amount of the urethane (meth)acrylate represented by formula (1), the monofunctional (meth)acrylate and the difunctional (meth)acrylate represents at least 90% by mass of all the ultraviolet-curable compounds contained within the ultraviolet-curable composition, and as a result, yellowing or reduced light reflectance can be better suppressed even under conditions of high temperature and high humidity, enabling the formation of a cured film having excellent durability. Furthermore, warping, which can cause a deterioration in various properties, is also minimal.

The amount of the urethane (meth)acrylate within the ultraviolet-curable composition for a light transmission layer according to the present invention preferably represents 40 to 80% by mass, and more preferably 50 to 70% by mass, of all the ultraviolet-curable compounds within the composition. By including an amount of the urethane (meth)acrylate that satisfies this range, a cured film can be formed that exhibits excellent shape retention and adhesion properties, and minimizes degradation of the light reflection film under conditions of high temperature and high humidity.

Furthermore, by jointly using a monofunctional (meth)acrylate and a difunctional (meth)acrylate, properties such as the adhesion, the durability, and reductions in warping can be favorably controlled. In those cases where a monofunctional (meth)acrylate and a difunctional (meth)acrylate are used in combination, the amount of the monofunctional (meth)acrylate among all the ultraviolet-curable compounds contained within the ultraviolet-curable composition is preferably within a range from 5 to 30% by mass, and more preferably from 5 to 20% by mass, whereas the amount of the difunctional (meth)acrylate is preferably within a range from 10 to 50% by mass, and more preferably from 10 to 35% by mass. By ensuring that the amounts of the monofunctional (meth)acrylate and the difunctional (meth)acrylate satisfy the respective ranges above, the viscosity and the elastic modulus of the cured film can be favorably regulated, and a cured film can be realized that suffers minimal shrinkage or warping, and yet exhibits excellent adhesion.

Besides the urethane (meth)acrylate represented by formula (1) and the monofunctional and difunctional (meth)acrylates described above, the ultraviolet-curable composition for a light transmission layer according to the present invention may also include a conventional photopolymerization initiator or thermal polymerization initiator or the like.

Examples of photopolymerization initiators that may be used in the present invention include molecular cleavage-type photopolymerization initiators such as benzoin isobutyl ether, 2,4-diethylthioxanthone, 2-isopropylthioxanthone, benzil, 1-hydroxycyclohexyl phenyl ketone, benzoin ethyl ether, benzyl dimethyl ketal, 2-hydroxy-2-methyl-1-phenylpropan-1-one, 1-(4-isopropylphenyl)-2-hydroxy-2-methylpropan-1-one and 2-methyl-1-(4-methylthiophenyl)-2-morpholinopropan-1-one, and hydrogen abstraction-type photopolymerization initiators such as benzophenone, 4-phenylbenzophenone, isophthalphenone and 4-benzoyl-4'-methyl-diphenyl sulfide.

Examples of additives that may be used in the present invention include surfactants, leveling agents, thermal polymerization inhibitors, antioxidants such as hindered phenols and phosphites, and photostabilizers such as hindered amines. Furthermore, sensitizers such as trimethylamine, methyldimethanolamine, triethanolamine, p-dimethylaminoacetophenone, ethyl p-dimethylaminobenzoate, isoamyl p-dimethylaminobenzoate, N,N-dimethylbenzylamine and 4,4'-bis(diethylamino)benzophenone may also be used, and other amines that do not undergo an addition reaction with the photopolymerizable compounds described above may also be used in combination.

If required, the ultraviolet-curable composition for a light transmission layer according to the present invention may also use other ultraviolet-curable compounds besides the (meth)acrylates described above. Examples of other (meth)acrylates that may be used include trimethylolpropane tri(meth)acrylate and pentaerythritol tri(meth)acrylate; monomers having an isocyanurate structure such as bis(2-acryloyloxyethyl)hydroxyethyl isocyanurate, bis(2-acryloyloxypropyl)hydroxypropyl isocyanurate, bis(2-acryloyloxybutyl)hydroxybutyl isocyanurate, bis(2-methacryloyloxyethyl)hydroxyethyl isocyanurate, bis(2-methacryloyloxypropyl)hydroxypropyl isocyanurate, bis(2-methacryloyloxybutyl)hydroxybutyl isocyanurate, tris(2-acryloyloxyethyl) isocyanurate, tris(2-acryloyloxypropyl) isocyanurate, tris(2-acryloyloxybutyl) isocyanurate, tris(2-methacryloyloxyethyl) isocyanurate, tris(2-methacryloyloxypropyl) isocyanurate and tris(2-methacryloyloxybutyl) isocyanurate; and dipentaerythritol poly(meth)acrylate, ethylene oxide-modified phosphoric (meth)acrylate, ethylene oxide-modified alkylated phosphoric di(meth)acrylate and diethylaminoethyl (meth)acrylate. N-vinylpyrrolidone, N-vinylcaprolactam, and vinyl ether monomers may also be exemplified.

The viscosity at 25°C of the ultraviolet-curable composition for a light transmission layer according to the present invention is preferably within a range from 1,000 to 3,000 (mPa·s), and is more preferably from 1,200 to 2,500 (mPa·s). Ensuring a viscosity within this range facilitates the formation of thick films.

The elastic modulus at 25°C of a cured film of the ultraviolet-curable composition for a light transmission layer according to the present invention is preferably within a range from 150 to 1,500 (MPa), and is more preferably from 150 to 1,000 (MPa). Provided the elastic modulus of the cured film is within the above range, strain during curing can be more readily alleviated, and an optical disk can be obtained that suffers minimal reduction in adhesive strength even when exposed to conditions of high temperature and high humidity for long periods, and also suffers minimal warping.

### [Optical disk]

An optical disk of the present invention includes at least a light reflection layer and a light transmission layer formed on a substrate, in which recording or reading is conducted by irradiating a laser beam through the light transmission layer, wherein the light transmission layer is composed of a cured product of the ultraviolet-curable composition for a light transmission layer described above. By using the ultraviolet-curable composition for a light transmission layer described above as the light transmission layer, the optical disk of the present invention is resistant to reductions in the adhesive strength even under conditions of high temperature and high humidity, and exhibits excellent durability and light fastness even when silver or a silver alloy is used as the light reflection film, meaning favorable recording and reading of information can be conducted.

The light transmission layer within the optical disk of the present invention preferably efficiently transmits blue laser light having a laser beam emission wavelength within a range from 370 to 430 nm, and the light transmittance for light of 405 nm through a layer of thickness 100 µm is preferably at least 85%, and more preferably 90% or higher.

The total thickness of the light transmission layer is typically within a range from 50 to 150 µm, and is preferably from 75 to 150 µm. In the case of a single layer, the thickness of the light transmission layer is typically set to approximately 100 µm, but because this thickness has a large effect on the light transmittance and the reading and recording of signals, control of the thickness is essential. The light transmission layer may be formed from a single cured layer of the above thickness, or a plurality of layers may be laminated together. In the case of a plurality of layers, the combined total of the individual thicknesses of each light transmission layer is preferably within the thickness range listed above.

As the light reflection layer, any material may be used that reflects the laser beam and enables the formation of a recordable or readable optical disk, and for example, metals such as gold, silver, aluminum, or alloys thereof, or inorganic compounds such as silicon may be used. Of these, the use of either silver or an alloy containing silver as the main component is preferred, as such materials exhibit superior reflectance of light in the vicinity of 400 nm. The thickness of the light reflection layer is preferably within a range from approximately 10 to 60 nm.

A disc-shaped circular resin substrate can be used as the substrate, and a polycarbonate is preferred as the resin. In the case of a read-only optical disk, the pits that carry the recorded information are formed in the surface of the substrate to which the light reflection layer is laminated.

Furthermore, in the case of a recordable optical disk, an information recording layer is provided between the light reflection layer and the light transmission layer. Any layer that enables the recording and reading of information can be used as the information recording layer, including a phase-change recording layer, a magneto-optical recording layer, or an organic dye recording layer.

In cases where the information recording layer is a phase-change recording layer, the information recording layer is typically composed of a dielectric layer and a phase-change film. The dielectric layer requires a function for alleviating the heat generated in the phase-change layer and a function for regulating the disk reflectance, and is typically formed using a mixed composition of ZnO and SiO₂. The phase-change film exhibits a difference in reflectance as a result of phase-changing of the film between an amorphous state and a crystalline state, and can be formed using a Ge-Sb-Te-based alloy, a Sb-Te based alloy, or an Ag-In-Sb-Te based alloy.

The optical disk of the present invention may have two or more information recording regions. For example, in the case of a read-only optical disk, a first light reflection layer and a first light transmission layer may be laminated onto a substrate having pits, another layer may then be laminated on top of the first light transmission layer, and a second light reflection layer and a second light transmission layer then formed on top of this other layer. In this case, pits are formed in the first light transmission layer or the other layer laminated thereof. Furthermore, in the case of a recordable and readable optical disk, a configuration is used in which an information recording layer, a light reflection layer and a light transmission layer are laminated on top of a substrate, but a configuration having two information recording layers in which a second light transmission layer, a second information recording layer and a second light transmission layer are formed on top of the first light transmission layer, or a configuration having three or more information recording layers, prepared by laminating another series of layers in a similar manner, may also be used. In those cases where a plurality of layers are laminated together, the individual thickness of each layer is adjusted appropriately so that the combined thickness satisfies the range described above.

Furthermore, in the optical disk of the present invention, the light transmission layer may be the outermost surface layer, or an additional surface coating layer may be provided on the surface of the light transmission layer.

The optical disk of the present invention includes both read-only disks and recordable and readable disks. A read-only disk can be produced by forming pits that function as an information recording layer during injection molding of a single circular resin substrate, forming a light reflection layer on top of the information recording layer, subsequently applying the ultraviolet-curable composition for a light transmission layer to the surface of the light reflection layer using a method such as spin coating, and then performing irradiation with ultraviolet radiation to cure the composition and form a light transmission layer. Furthermore, a recordable and readable disk can be produced by forming a light reflection layer on a single circular resin substrate, providing an information recording layer such as a phase change film or a magneto-optical recording film, subsequently applying the ultraviolet-curable composition for a light transmission layer to the surface of the light reflection layer using a method such as spin coating, and then performing irradiation with ultraviolet radiation to cure the composition and form a light transmission layer.

In those cases where the ultraviolet-curable composition for a light transmission layer coated onto the light reflection layer is cured by ultraviolet irradiation, the irradiation may be conducted using either a continuous irradiation system that uses a metal halide lamp or a high-pressure mercury lamp or the like, or a flash irradiation system disclosed in USP 5,904,795. In terms of enabling efficient curing, the flash irradiation system is preferred.

When ultraviolet irradiation is conducted, the process is preferably controlled so that the accumulated irradiation dose is within a range from 0.05 to 1 J/cm². The accumulated irradiation dose is more preferably from 0.05 to 0.8 J/cm², and still more preferably from 0.05 to 0.6 J/cm². The ultraviolet-curable composition for a light transmission layer used in the optical disk of the present invention cures satisfactorily even with a comparatively small accumulated irradiation dose, and generates a layer with no tack at either the edges or surface of the optical disk. Moreover, warping or deformation of the optical disk is also prevented.

In the optical disk of the present invention, the adhesive strength between the light transmission layer and the light reflection layer following exposure to an environment at a temperature of 80°C and a humidity of 85% for 24 hours is preferably at least 3 kgf/cm², and is more preferably 5 kgf/cm² or greater. Provided the adhesive strength between the two layers exceeds the limit mentioned above, peeling at the interface between the two layers does not occur, even upon exposure to conditions of high temperature and high humidity for a long period, and recording and reading can be conducted favorably.

Furthermore, when the optical disk of the present invention is exposed to an environment at a temperature of 80°C and a humidity of 85% for 240 hours, the change in the specular reflectance, from before the exposure to after the exposure, for light of 405 nm measured at the side of the light transmission layer is preferably within 2%, and even more preferably within 1%. Provided the change in specular reflectance from before exposure to after exposure is within the above range, recording and reading of the optical disk can be conducted favorably even if the disk is exposed to conditions of high temperature and high humidity for a long period. Moreover, when exposed to fluorescent light, the change in the reflectance is preferably within 2% and the change in color difference is preferably within 3%.

### EMBODIMENTS

Examples of specific configurations for a single layer optical disk and a double layer optical disk are presented below as specific examples of the optical disk of the present invention.

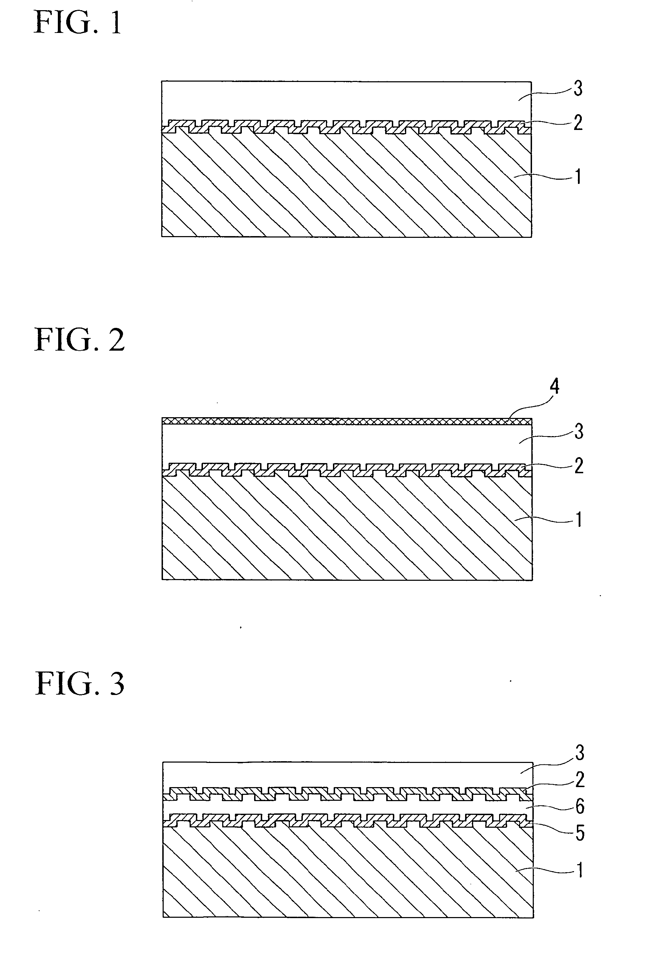

Among the various configurations for the optical disk of the present invention, a preferred embodiment for a single layer optical disk includes, as shown in FIG. 1, a light reflection layer 2 and a light transmission layer 3 laminated onto a substrate 1, wherein recording or reading of information is conducted by irradiating a blue laser beam onto the disk from the side of the light transmission layer. The unevenness shown in the figure is a schematic representation of the recording track (groove). The light transmission layer 3 is composed of a cured film of the ultraviolet-curable composition of the present invention, and the thickness of that layer is within a range from 100 ± 10 µm. The thickness of the substrate 1 is approximately 1.1 mm, and the light reflection film is a thin film of silver or the like.

FIG. 2 represents a configuration in which a hard coat layer 4 is provided as the outermost surface layer of the configuration illustrated in FIG. 1. The hard coat layer is preferably a layer that exhibits a high degree of hardness and superior abrasion resistance. The thickness of the hard coat layer is preferably within a range from 1 to 10 µm, and is preferably from 3 to 5 µm.

A preferred embodiment for a single layer optical disk includes, as shown in FIG. 1, a light reflection layer 2 and a light transmission layer 3 laminated onto a substrate 1, wherein recording or reading of information is conducted by irradiating a blue laser-beam onto the disk from the side of the light transmission layer. The unevenness shown in the figure is a schematic representation of the recording track (groove). The light transmission layer 3 is composed of a cured film of the ultraviolet-curable composition of the present invention, and thickness of that layer is within a range from 100 ± 10 µm. The thickness of the substrate 1 is approximately 1.1 mm, and the light reflection film is a thin film of silver or the like.

Examples of a preferred embodiment for a multi-layer optical disk includes, as shown in FIG. 3, a double layer optical disk including a light reflection layer 5 and a light transmission layer 6 laminated onto a substrate 1, and then an additional light reflection layer 2 and a light transmission layer 3 laminated on top of the light transmission layer 6, wherein recording or reading of information is conducted by irradiating a blue laser beam onto the disk from the side of the light transmission layer 3. The light transmission layer 3 and the light transmission layer 6 are composed of cured films of ultraviolet-curable compositions, and at least one of these layers is formed from the ultraviolet-curable composition of the present invention. The combined thickness of the light transmission layer 3 and the light transmission layer 6 is within a range from 100 ± 10 µm. The thickness of the substrate 1 is approximately 1.1 mm, and the light reflection film is a thin film of silver or the like.

In the double layer optical disk of this configuration, because a recording track (groove) is also formed in the surface of the light transmission layer 6, the light transmission layer 6 may also be formed from a plurality of layers, by laminating a layer composed of a cured film of an ultraviolet-curable composition in which recording tracks can be readily formed on top of a layer composed of a cured film of an ultraviolet-curable composition that exhibits excellent adhesion. Furthermore, in this configuration, as was the case for the single layer optical disk, a hard coat layer may be provided as the outermost surface layer.

A method of producing the optical disk illustrated in FIG. 1 is described below.
First, the substrate 1 having a guide groove for tracking the laser beam known as a recording track (groove) is prepared by injection molding of a polycarbonate resin. Subsequently, the light reflection layer 2 is formed on the recording track-side surface of the substrate 1 by either sputtering or vapor deposition of a silver alloy or the like. The ultraviolet-curable composition of the present invention is then coated onto the light reflection layer, and ultraviolet radiation is irradiated onto the disk, either from one side or both sides of the disk, thereby curing the ultraviolet-curable composition to form the light transmission layer 3 and complete preparation of the optical disk of FIG. 1. In the case of the optical disk illustrated in FIG. 2, spin coating or the like is then used to form the hard coat layer 4 on top of the light transmission layer 3.

A method of producing the optical disk illustrated in FIG. 3 is described below.
First, the substrate 1 having a guide groove for tracking the laser beam known as a recording track (groove) is prepared by injection molding of a polycarbonate resin. Subsequently, the light reflection layer 5 is formed on the recording track-side surface of the substrate 1 by either sputtering or vapor deposition of a silver alloy or the like.

The light transmission layer 6 composed of either the ultraviolet-curable composition of the present invention or another arbitrary ultraviolet-curable composition is then formed on top of the light reflection layer 5, and at this point, a mold is used to transfer a recording track (groove) onto the surface of the light transmission layer 6. The process of transferring the recording track (groove) is described below. Namely, the ultraviolet-curable composition is coated onto the light reflection layer 5, a mold for forming the recording track (groove) is stuck to the light reflection layer 5, and this bonded disk structure is then irradiated with ultraviolet radiation, either from one side or both sides of the disk, thereby curing the ultraviolet-curable composition. Subsequently, the mold is released, and sputtering or vapor deposition of a silver alloy or the like is used to form the light reflection layer 2 on the surface of the light transmission layer 6 having the recording track (groove). An ultraviolet-curable composition is than applied to the light reflection layer 2 and cured by ultraviolet irradiation, thus forming the light transmission layer 3 and completing preparation of the optical disk of FIG. 3.

### EXAMPLES

A more detailed present invention of the present invention is presented below using a series of synthesis examples and examples, although the present invention is in no way limited by the examples presented below. In the following examples, "parts" represents "parts by mass".

### (Synthesis example 1) Urethane acrylate UA1

A flask fitted with a thermometer, a stirrer and a condenser was charged with 727 parts of a ring-opening reaction product of ε-caprolactone and hydroxyethyl acrylate (OH value = 123 KOH-mg/g, n = 3 in general formula (1)), the temperature was raised to 60°C under constant stirring, and 273 parts of an isocyanurate-based polyisocyanate of hexamethylene diisocyanate (NCO = 23.8%) was then added gradually over one hour with careful consideration of the heat generated. Reaction was continued for 10 hours, and infrared spectroscopy was used to confirm the disappearance of the isocyanate group absorption, thus yielding the target urethane acrylate (UA1) having three acryloyl groups.

### (Synthesis example 2) Urethane acrylate UA2

A flask fitted with a thermometer, a stirrer and a condenser was charged with 727 parts of a ring-opening reaction product of ε-caprolactone and hydroxyethyl acrylate (OH value = 123 KOH-mg/g, n = 3 in general formula (1)), the temperature was raised to 60°C under constant stirring, and 273 parts of a biuret-based polyisocyanate of hexamethylene diisocyanate (NCO = 23.3%) was then added gradually over one hour with careful consideration of the heat generated. Reaction was continued for 10 hours, and infrared spectroscopy was used to confirm the disappearance of the isocyanate group absorption, thus yielding the target urethane acrylate (UA2).

### (Synthesis example 3) Urethane acrylate UA3

A flask fitted with a thermometer, a stirrer and a condenser was charged with 238 parts of tolylene diisocyanate, the temperature was raised to 60°C under constant stirring, and 602 parts of polytetramethylene glycol (OH value = 126 KOH-mg/g) was then added gradually over four hours with careful consideration of the heat generated. Reaction was continued for 6 hours, 160 parts of hydroxyethyl acrylate and 0.2 parts of dibutyltin dilaurate were added, and reaction was continued for a further 10 hours. Infrared spectroscopy was used to confirm the disappearance of the isocyanate group absorption, thus yielding the target urethane acrylate (UA3).

### (Synthesis example 4) Epoxy acrylate EA1

870 parts of a bisphenol A epoxy resin (epoxy equivalent weight = 483 g/eq), 127 parts of acrylic acid and 3 parts of triphenylphosphine were reacted for 5 hours at 120°C, yielding the target epoxy acrylate (EA1).

Each of the compositions prepared using the blend formulations shown below in Table 1 was dissolved by heating at 60°C for 3 hours, thereby preparing ultraviolet-curable compositions of examples 1 to 5 and comparative examples 1 to 4. The thus obtained compositions were evaluated using the methods described below.

### <Method of measuring viscosity>

The viscosity of the ultraviolet-curable composition at 25°C was measured using a B-type viscometer (manufactured by Tokyo Keiki Inc.).

### <Method of measuring elastic modulus>

The ultraviolet-curable composition was applied to a glass plate in an amount sufficient to generate a cured film thickness of 100 ± 10 µm, and the composition was then cured by irradiation with a metal halide lamp (fitted with a cold mirror, lamp output: 120 W/cm) in a nitrogen atmosphere using an irradiation dose of 500 mJ/cm². The elastic modulus of the resulting cured film was measured using an automatic dynamic viscoelasticity analyzer manufactured by TA Instruments Inc., and the dynamic elastic modulus E' at 25°C was recorded as the elastic modulus.

### <Method of measuring adhesive strength>

An optical disk substrate of diameter 120 mm and thickness 1.2 mm was prepared, an alloy of silver and bismuth containing silver as the main component was sputtered onto the substrate in a thickness of 20 to 40 nm, the ultraviolet-curable composition shown in Table 1 was spin coated onto the metal reflection film in an amount sufficient to generate a film thickness following curing of 100 ± 10 µm, and the composition was irradiated twice with ultraviolet radiation using a metal halide lamp fitted with a cold mirror (120 W/cm), using an irradiation dose of 500 mJ/cm² (measured using an actinometer UVPF-36, manufactured by Eyegraphics Co., Ltd.), thereby curing the composition and forming a sample for measurement of the adhesive strength. Each of the samples was exposed to conditions of high temperature and high humidity at 80°C and 85% RH for 24 hours (a durability test) using a PR-2PK apparatus manufactured by Espec Corporation. A pre-test sample and a post-test sample were each sanded lightly with sandpapers #1500 and #280 until the entire surface film developed a slight cloudy appearance, the sanding dust was removed by wiping with water and ethanol, and the sample was then attached to a 10 mm square stainless steel jig using a construction adhesive tape Y-4920 manufactured by Sumitomo 3M Limited. Using a push-pull gauge (500 N full-scale) manufactured by Tester Sangyo Co., Ltd., the jig attached to the substrate was pulled, and the pull strength was measured and recorded as the adhesive strength.

As is evident from Table 1, by using the ultraviolet-curable compositions for light transmission layers according to the present invention which use UA1 and UA2, cured films can be obtained which, as seen in examples 1 to 5, have a reduced elastic modulus, superior flexibility, and a high adhesive strength to the silver alloy reflection film. In contrast, in comparative example 3 which used EA1 but did not use UA1 or UA2, the elastic modulus was high, flexibility was poor, and the adhesive strength to the silver alloy reflection film was low. Furthermore, example 8 which included a trifunctional acrylate exhibited a large degree of shrinkage upon curing, resulting in reduced adhesive strength to the silver alloy reflection film.

### <Evaluations of optical disk durability and reflectance, and surface inspection of light reflection film>

An optical disk sample prepared in the same manner as that described above was exposed to conditions of high temperature and high humidity at 80°C and 85% RH for 240 hours (a durability test) using a PR-2PK apparatus manufactured by Espec Corporation. A pre-test sample and a post-test sample were each measured for specular reflectance at 405 nm from the side of the light transmission layer, using a spectrophotometer UV-3100 (manufactured by Shimadzu Corporation), and an evaluation was then performed based on the criteria listed below.
○: the change in reflectance from pre-test to post-test is within 2.0%
×: the change in reflectance from pre-test to post-test exceeds 2.0%

### <Evaluations of optical disk light fastness (fluorescent light exposure test) and reflectance, and evaluation of color difference of light transmission layer>

An optical disk sample prepared in the same manner as that described above was subjected to an exposure test under fluorescent light. Two 20 W fluorescent lamps (Neolumi Super FL20SSw/18 (18 watt) manufactured by Mitsubishi Electric Corporation) were arranged in parallel within the same plane so that the centers of the two lamps were separated by a distance of 8 cm, and the fluorescent light exposure test was conducted by placing the optical disk in a position 20 cm from the center of the fluorescent lamps with the light transmission layer facing the fluorescent lamps.
Exposure was conducted for 240 hours, and the reflectance of a pre-test sample and a post-test sample was measured from the side of the light transmission layer using a spectrophotometer. Furthermore, a spectroscopic colorimeter (CM-2600d, manufactured by Konica Minolta Holdings Inc.) was used to measure the color difference of a pre-test sample and a post-test sample from the side of the light transmission layer, and the color difference was then evaluated on the basis of the criteria listed below. The color difference ΔE*ab is determined using the coordinates L*, a* and b* in the L*a*b* color system at the light transmission layer-side of the optical disk (the side of the silver alloy semi-transparent reflection film) for a 2° field of view from a C light source, and is calculated from the formula ΔE*ab = {(ΔL*)²+(Δa*)²+(Δb*)²+(Δb*)²}^{1/2}, wherein ΔL*, Δa* and Δb* represent the changes in L*, a* and b* from pre-test to post-test. A smaller value for ΔE*ab indicates less discoloration for the optical disk, indicating superior discoloration resistance for the disk.

### (Reflectance)

○: the change in reflectance from pre-test to post-test is within 2.0%
×: the change in reflectance from pre-test to post-test exceeds 2.0% (Color difference)
○: the change in color difference is within 3.0%
×: the change in color difference exceeds 3.0%

**[Table 1]**

| | | | Example | | | | | Comparative example | | | |
|---|---|---|---|---|---|---|---|---|---|---|---|
| | | | 1 | 2 | 3 | 4 | 5 | 1 | 2 | 3 | 4 |
| Urethane acrylate | | UA1 | 58 | | | | | | | | 60 |
| | | UA2 | | 58 | 62 | 62 | 60 | | | | |
| | | UA3 | | | | | | 40 | 53 | | |
| Epoxy acrylate | | EA1 | | | | | | 20 | | 70 | |
| Difunctional acrylates | | TCDDA | 12 | 12 | 14 | 14 | 12 | | 10 | | 14 |
| | | DPGDA | 14 | 14 | 14 | 12 | 14 | 20 | 20 | 14 | 12 |
| Monofunctional acrylates | | PEA | 14 | 14 | | | | 18 | 15 | 14 | |
| | | ECA | | | 8 | | | | | | |
| | | THFA | | | | 10 | | | | | |
| | | IBXA | | | | | 12 | | | | |
| Trifunctional acrylate | | TMPTA | | | | | | | | | 12 |
| Other components | | PM-2 | 0.01 | 0.01 | 0.01 | 0.01 | 0.01 | 0.01 | 0.01 | 0.01 | 0.01 |
| | | Irg.184 | 2 | 2 | 2 | 2 | 2 | 2 | 2 | 2 | 2 |
| Total | | | 100.01 | 100.01 | 100.01 | 100.01 | 100.01 | 100.01 | 100.01 | 100.01 | 100.01 |
| Viscosity (mPa·s / 25°C) | | | 1200 | 1250 | 1360 | 1460 | 1560 | 1270 | 1330 | 1530 | 2280 |
| Elastic modulus (25°C) / MPa | | | 190 | 200 | 170 | 290 | 570 | 830 | 710 | 3600 | 830 |
| Adhesive strength (kgf/cm²) | | Pre-test | 7.72 | 11.25 | 4.81 | 10.19 | 3.07 | 2.46 | 3.38 | 1.64 | 1.47 |
| | | Post-test | 9.59 | 13.01 | 5.29 | 4.43 | 3.18 | 2.83 | 5.76 | 1.49 | 1.26 |
| Reflectance (%) | Durability test | Pre-test | 34.80 | 34.86 | 34.88 | 34.46 | 34.86 | 34.64 | 34.43 | 34.70 | 35.02 |
| | | Post-test | 32.95 | 33.82 | 33.30 | 33.30 | 34.05 | 32.21 | 28.53 | 34.04 | 34.06 |
| | | Change | -1.85 | -1.04 | -1.58 | -1.16 | -0.81 | -2.43 | -5.90 | -0.66 | -0.96 |
| | | Evaluation | ○ | ○ | ○ | ○ | ○ | × | × | ○ | ○ |
| | Fluorescent light exposure test | Pre-test | 34.90 | 35.07 | 34.88 | 34.97 | 34.81 | 34.48 | 34.54 | 34.99 | 35.25 |
| | | Post-test | 33.92 | 34.04 | 33.20 | 33.28 | 33.07 | 31.09 | 29.40 | 35.27 | 33.28 |
| | | Change | -0.98 | -1.03 | -1.68 | -1.69 | -1.74 | -3.39 | -5.14 | 0.28 | -1.97 |
| | | Evaluation | ○ | ○ | ○ | ○ | ○ | × | × | ○ | ○ |
| Color difference (ΔE) | Fluorescent light exposure test | | 1.00 | 0.48 | 1.20 | 0.58 | 1.03 | 3.06 | 5.78 | 0.49 | 2.09 |
| | Evaluation | | ○ | ○ | ○ | ○ | ○ | × | × | ○ | ○ |

Each of the compounds shown in Table 1 is listed below.
UA1: the urethane acrylate obtained in synthesis example 1
UA2: the urethane acrylate obtained in synthesis example 2
UA3: the urethane acrylate obtained in synthesis example 3
EA1: the urethane acrylate obtained in synthesis example 1
TMPTA: trimethylolpropane triacrylate
TCDDA: tricyclodecanedimethanol diacrylate
DPGDA: dipropylene glycol diacrylate
PEA: phenoxyethyl acrylate
ECA: ethylcarbitol acrylate
THFA: tetrahydrofurfuryl acrylate
IBXA: isobornyl acrylate
PM-2: ethylene oxide-modified phosphoric dimethacrylate (manufactured by Nippon Kayaku Co., Ltd.)
Irg.184: IRGACURE 184 (manufactured by Ciba Specialty Chemicals Inc.)

As is evident from Table 1, the optical disks of examples 1 to 5 that used the compositions of the present invention each exhibited favorable adhesive strength, minimal change in reflectance, and favorable results following the durability test conducted under conditions of high temperature and high humidity and the fluorescent light exposure test. In contrast, the optical disks of comparative examples 1 and 2 exhibited large changes in the reflectance, and also suffered large changes following the durability test conducted under conditions of high temperature and high humidity and the fluorescent light exposure test. The optical disks of comparative examples 3 and 4 exhibited weak adhesive strength between the light reflection layer and the light transmission layer.

### BRIEF DESCRIPTION OF THE DRAWINGS

FIG. 1 is a diagram illustrating one example of a single layer optical disk of the present invention.
FIG. 2 is a diagram illustrating one example of a single layer optical disk of the present invention.
FIG. 3 is a diagram illustrating one example of a double layer optical disk of the present invention.

### DESCRIPTION OF THE REFERENCE SYMBOLS

- 1: Substrate
- 2: Light reflection layer
- 3: Light transmission layer of ultraviolet-curable composition
- 4: Hard coat layer
- 5: Light reflection layer
- 6: Light transmission layer of ultraviolet-curable composition

## Claims

1. An ultraviolet-curable composition for a light transmission layer, which is used for the light transmission layer of an optical disk in which at least a light reflection layer and the light transmission layer are laminated on a substrate, and reading of information is conducted by irradiating a blue laser from a side of the light transmission layer,
the ultraviolet-curable composition, comprising a urethane (meth)acrylate represented by a formula (1) shown below: 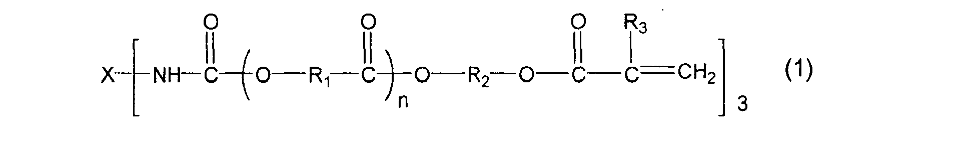 (wherein X represents a residue obtained by removing an isocyanato group from a trimer of an aliphatic diisocyanate compound or a residue obtained by removing an isocyanato group from a trimer of an alicyclic diisocyanate compound, R₁ represents an alkylene group of 2 to 12 carbon atoms, R₂ represents an alkylene group of 2 to 16 carbon atoms, R₃ represents a hydrogen atom or a methyl group, and n represents an integer of 1 to 10); and
at least one of a monofunctional (meth)acrylate and a difunctional (meth)acrylate, wherein
a combined amount of the urethane (meth)acrylate, the monofunctional (meth)acrylate and the difunctional (meth)acrylate is at least 90% by mass of the ultraviolet-curable composition.

2. An ultraviolet-curable composition for a light transmission layer according to Claim 1, wherein X within the formula (1) is a trivalent group represented by either formula (2) shown below: 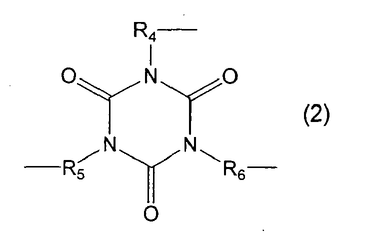 (wherein R₄, R₅ and R₆ each independently represents a chain-like or cyclic hydrocarbon group of 2 to 16 carbon atoms that may include branching), or
formula (3) shown below: 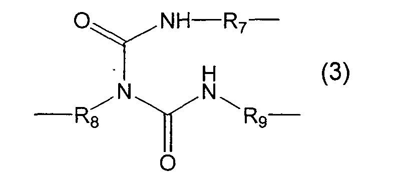 (wherein R₇, R₈ and R₉ each independently represents a chain-like or cyclic hydrocarbon group of 2 to 16 carbon atoms that may include branching).

3. An ultraviolet-curable composition for a light transmission layer according to Claim 1 or 2, wherein
an amount of the monofunctional (meth)acrylate is within a range from 5 to 20% by mass of the ultraviolet-curable composition, and
an amount of the difunctional (meth)acrylate is within a range from 10 to 35% by mass of the ultraviolet-curable composition.

4. An ultraviolet-curable composition for a light transmission layer according to any one of Claims 1 to 3, wherein a viscosity of the ultraviolet-curable composition at 25°C is within a range from 1,000 to 3,000 (mPa·s).

5. An ultraviolet-curable composition for a light transmission layer according to any one of Claims 1 to 4, wherein an elastic modulus of a cured film of the ultraviolet-curable composition at 25°C is within a range from 150 to 1,500 (MPa).

6. An ultraviolet-curable composition for a light transmission layer according to any one of Claims 1 to 6, wherein the monofunctional (meth)acrylate is either a phenoxyethyl-based acrylate or a tetrahydrofurfuryl-based acrylate.

7. An optical disk in which at least a light reflection layer and a light transmission layer formed from a cured product of an ultraviolet-curable composition are laminated on a substrate,
reading of information is conducted by irradiating a blue laser from a side of the light transmission layer, and
the ultraviolet-curable composition is an ultraviolet-curable composition for a light transmission layer according to any one of Claims 1 to 6.

8. An optical disk according to Claim 7, wherein a total thickness of the light transmission layer is within a range from 50 to 150 µm.
